Europäisches Patentamt

European Patent Office

Office européen des brevets

(11) Publication number: **0 201 228**
A2

# EUROPEAN PATENT APPLICATION

(21) Application number: **86302876.7**

(22) Date of filing: **17.04.86**

(51) Int. Cl.⁴: **C 23 C  22/74,** H 01 F  1/18

(30) Priority: **30.04.85 US 729017**

(43) Date of publication of application: **12.11.86
Bulletin 86/46**

(84) Designated Contracting States: **BE DE FR GB IT SE**

(71) Applicant: **ALLEGHENY LUDLUM STEEL
CORPORATION, 1000 Six PPG Plaza, Pittsburgh
Pennsylvania 15222 - 5479 (US)**

(72) Inventor: **Choby, Edward George, Jr., 106 Lougeay Road,
Pittsburgh Pennsylvania 15235 (US)**

(74) Representative: **Sheader, Brian N. et al, ERIC POTTER &
CLARKSON 27 South Street, Reading Berkshire,
RG1 4QU (GB)**

(54) Grain-oriented silicon steel and stress coating therefor.

(57)  An improvement in a stress coating composition containing colloidal silica, metal phosphate and hexavalent chromium for application to grain-oriented silicon steels after final high temperature texture annealing to develop tensile stress in the steel is provided by replacing 5 to 50% of said colloidal silica with finely powdered silica to increase the viscosity of the stress coating composition and permit the coating to be applied in a uniform and controlled coating thickness to the silicon steel in strip form.

GRAIN-ORIENTED SILICON STEEL AND STRESS COATING THEREFOR

This invention relates to the manufacture of grain-oriented silicon steel having a stress coating thereon. More particularly, the invention relates to a stress coating composition of increased viscosity which places the steel in increased tensional stress at lower coating thickness.

It is known to produce silicon steel in strip form for various electrical applications, such as laminations for use in the manufacture of transformer cores. Grain-oriented silicon steel, which is used for this purpose, is produced by hot rolling to produce hot-rolled band. The hot-rolled band is cold rolled to final gauge in one or more cold-rolling steps with or without intermediate anneals. The cold-rolled strip is then coated with an annealing separator coating to form a base coating. The base-coated strip is subjected to a final high temperature texture annealing operation wherein the desired grain orientation is developed. After high temperature annealing, a stress coating composition is applied to the steel strip as a finish coating. The stress coating places the steel in tension on cooling from the temperature at which it is cured. Such tension decreases the core losses of the steel.

Stress coating compositions for this purpose conventionally contain colloidal silica in combination with a metal phosphate and hexavalent chromium in aqueous solution. The metal phosphate may include aluminum, magnesium calcium, or manganese. Known stress coating compositions disclosed in U.S. Patents 3,856,568; 3,948,786; 4,032,366; and 4,213,792 include colloidal silica, metal phosphate and hexavalent chromium. U.S. Patent 4,120,702 discloses a complex composition containing metals selected from Fe, Mn, Mg, and Al, and phosphoric acid, colloidal silica and volatile acids.

U.S. Patent 4,347,085 further discloses the addition of small amounts of boric acid or vanadium pentoxide to a stress coating composition. The above-mentioned U.S. Patent 3,856,568 discloses the addition of small amounts of boric acid and supermicrogranular silica, such as up to 2 gms per 100 cc of colloidal silica, to prevent sticking of adjacent coated sheets in coil form during stress relief annealing.

With such stress coatings, the viscosity thereof is typically so low that they cannot be properly metered onto the silicon steel strip, but instead the strip must be flooded with the coating and the excess removed by the use of rubber-coated squeegee rolls. Such a practice requires high roll pressures and, accordingly, the useful life of the rubber coated rolls is relatively short. In addition, the low viscosity of the coating composition makes independent control of the coating thickness on each side of the strip practically impossible. Difficulties are also encountered when there is a stop in the coating line because the excess coating then flows over the strip, creating a powdery surface thereon. This powder from the strip surface transfers to the drive rolls in the coating line and may in some instances build up on the curing furnace hearth rolls, causing the production of irregularities on the silicon steel strip surface as it passes through the curing furnace.

It is, accordingly, a primary object of the present invention to provide a stress coating composition for application to grain-oriented silicon steel after final high temperature texture annealing, which composition has a relatively high viscosity so that it may be metered onto the surface of the silicon steel strip.

In accordance with the present invention, a stress coating composition is provided for application to final annealed grain-oriented silicon steel to provide tensional stress. The stress coating composition contains metal phosphate, hexavalent chromium, water and silica in the form of colloidal silica and 5 to 50% finely powdered silica. The stress coating has improved viscosity to permit metering of uniform and controlled coating thickness on the steel.

An article of manufacture of grain-oriented silicon steel having a base coating and a cured stress coating of a composition according to this invention is also provided, the cured stress coating placing the steel in tension of at least 800 psi (56.32 kg/cm$^2$) with the effective total thickness of base coating and stress coating as low as 0.12 mil (0.0003 cm).

The stress coating composition of the present invention contains silica, metal phosphate, and hexavalent chromium in an aqueous solution for application to silicon steel. Preferably, the stress coating composition contains at least 4%, by weight, silica ($SiO_2$) of which 5 to 50% thereof is finely powdered silica and the balance being colloidal silica. More particularly, in stress coating compositions conventionally containing at least 4%, by weight, colloidal silica, the present invention provides that 5 to 50% of the colloidal silica be replaced with finely powdered silica. The greater the percentage of the finely powdered silica used to replace the colloidal silica in the stress coating composition, the higher will be the viscosity of the stress coating composition. In addition, as will be demonstrated by the specific examples reported hereinafter, the viscosity of the coating will also be affected by the amount of water present in the colloidal silica. More specifically, the higher the water-to-solids ratio in the colloidal silica, the lower will be the viscosity of the composition. Consequently, with increasing ratios of water-to-solid in the colloidal silica, the amount of colloidal silica replaced by finely powdered silica must be

0201228

correspondingly increased to provide the desired increased viscosity with respect to the coating composition. To permit proper metering onto the strip surface in typical commercial applications, the viscosity of the coating composition should be greater than about 50 centipoise (0.05 Pa/sec). A preferable means to achieve this is for the coating composition to embody a colloidal silica containing a maximum of about 50%, by weight, of water.

The "finely powdered silica" suitable for use in the practice of the invention may be defined as material which has a particle size generally of the order of that present in colloidal silica, i.e., in the range of 1 to 100 millimicrons. Preferably, the particle size may range up to 50 millimicrons, for the reason that smaller particle sizes have a greater surface area-to-weight ratio than larger particles. An important feature of the present invention is the surface attraction effects which are enhanced by particles having such greater surface area.

The finely powdered silica may be produced in a conventional manner, such as by a known wet method and flame method. In the wet method, sodium silicate is neutralized to precipitate particles of silica. In the flame method, silicon tetrachloride is hydrolyzed in a flame of hydrogen and oxygen to produce silica particles. Both methods produce silica particles of colloidal size with silanol groups on the particle surface. A difference between the silica particles of each method is the degree of hydroxylation on the particle surfaces. The silica particles produced by the wet process have a greater degree of surface hydroxylation. The hydroxyl groups on the surface of the particles cause the particles to agglomerate. As the tendency to agglomerate increases, so does the viscosity of a solution containing the particles. It is difficult to specify a range of agglomerate size, however, which is dependent on numerous factors such as the amount of powdered silica present, the polarity of the medium, and the shear rate. For reasons above, powdered silica produced by a wet method is preferred.

One example of "finely powdered silica" suitable for use in the practice of the invention is produced by PPG Industries and identified as HI-SIL T-600 silica. This material has an average ultimate particle size of 21 millimicrons and a surface area of about 150 square meters per gram.

The stress coating composition of the present invention achieves at least 800 psi (56.32 kg/cm$^2$) tension, preferably, at least 1000 psi (70.4 kg/cm$^2$) tension and, more preferably, at least 1200 psi (84.48 kg/cm$^2$) tension, all at relatively small coating thicknesses. Conventional coatings can achieve 800 psi (56.32 kg/cm$^2$) tension levels if the coating is sufficiently thick, with the actual tension dependent on the actual coating thickness.

The stress coating composition is applied to the grain-oriented silicon steel after final high temperature texture annealing during which a glass film or base coating of forsterite is formed on the steel surface. The measured tensional stress on the steel includes some contribution by the base coating such that the effective total thickness of the stress layer includes the forsterite base coating and the stress coating. With the effective total thickness as low as 0.12 mil (0.0003 cm), the stress coating composition can achieve at least 800 psi (56.32 kg/cm$^2$) tension in the steel. Preferably, an effective total thickness as low as 0.14 mil (0.00036 cm) can achieve at least 1000 psi (70.4 kg/cm$^2$) tension. Conventional stress coatings cannot achieve as much as 800 psi (56.32 kg/cm$^2$) tension at such small coating thicknesses.

In order to better understand the present invention, the following examples are presented.

### Example I

Two stress coating compositions were prepared containing, by weight, 9.0% of $P_2O_5$, 1.7% of MgO, 19.6% of $SiO_2$, and 4.5% of $CrO_3$. One composition was made using PPG HI-SIL T-600 and constituted finely powdered silica. The other composition was made with conventional colloidal silica. Various proportions of the two compositions were combined to give a number of solutions with various colloidal silica-to-finely powdered ratios. Final texture annealed silicon steel samples were coated and cured and the effective total thickness and the coating tension were measured, which data is presented in Table I.

### Table I

| % Powdered $SiO_2$ | Sample | Total Thickness (Mil) | Tension (PSI) | Appearance |
|---|---|---|---|---|
| 80 | A-29 | .28 | 835 | White |
| 80 | A-12 | .18 | 800 | White |
| 80 | A-10 | .13 | 905 | Gray |
| 60 | B- 7 | .26 | 845 | White |
| 60 | B- 4 | .22 | 795 | White |
| 60 | B- 8 | .12 | 830 | Gray |
| 40 | C-27 | .28 | 1345 | White |
| 40 | C-26 | .18 | 1295 | Gray |
| 40 | C- 2 | .14 | 1150 | Gray |
| 30 | D-21 | .23 | 1525 | Gray |
| 30 | D-20 | .16 | 1345 | Gray |
| 30 | D-22 | .12 | 895 | Gray |
| 20 | E-15 | .28 | 1670 | Green |
| 20 | E-13 | .16 | 1345 | Gray |
| 20 | E-11 | .15 | 1190 | Gray |

0201228

| % Powdered SiO$_2$ | Sample | Total Thickness (Mil) | Tension (PSI) | Appearance |
|---|---|---|---|---|
| 0 | F- 9 | .29 | 1675 | White |
| 0 | F- 5 | .17 | 1270 | Gray |
| 0 | F- 7 | .16 | 1370 | Gray |

With respect to these samples, coating tension was determined with respect to the percent powdered silica used to replace colloidal silica as a function of coating tension (psi) for various total thicknesses.

The stress coating composition of the present invention provided tension values of 800 psi or more for all but one sample for various total thicknesses, as low as 0.12 mil. Tension levels of 1000 psi or more were achieved at a total thickness, as low as 0.14 mil.

It can also be seen that above about 50% replacement with powdered silica over the range of thickness, the coating tension became less than 1000 psi. In other words, at least 50% of the silica content should be colloidal silica to achieve the desired tensional stress. Also, above about 50% replacement, larger amounts of water are required to prevent the coating from becoming too viscous that it cannot be pumped and metered onto the steel surface. Furthermore if water is added to reduce viscosity, the powdered silica, which is present in larger amounts, has a tendency to settle out of solution. At less than 5% replacement, the desired stable, high viscosity coating suitable to permit proper metering was not achieved. Coatings of the present invention may set to a soft gel which can be liquified upon stirring. Below 5% replacement, the reliquification, which is extremely important to a smooth fluid phase, does not occur. Furthermore, the cured stress coating of the present invention also had a good appearance on the steel in comparison to conventional coatings having silica in colloidal silica form only. Consequently, the range of replacement of colloidal silica by powdered silica is about 5 to 50%.

## Example II

An experiement was performed to determine the effect of ageing and water content on the viscosity of compositions wherein finely powdered silica was used to replace colloidal silica in stress coating compositions. The compositions, in weight percent, listed in Table II were prepared by adding increments of water to solution A.

### Table II

| Coating Solution | $P_2O_5$ | $CrO_3$ | MgO | Silica % Replaced with Powder | Silica Colloidal | Powder |
|---|---|---|---|---|---|---|
| A | 9.7 | 4.5 | 1.8 | 4.8 | 22.3 | 1.1 |
| B | 9.6 | 4.4 | 1.8 | 4.8 | 21.9 | 1.1 |
| C | 9.4 | 4.3 | 1.8 | 4.9 | 21.6 | 1.1 |
| D | 9.3 | 4.3 | 1.7 | 4.9 | 21.3 | 1.1 |
| E | 8.3 | 3.8 | 1.5 | 5.0 | 19.0 | 1.0 |

The viscosities were measured after various ageing periods and are tabulated in Table III. A viscosity of at least 50 centipoise, and preferably 100 centipoise, is required if the coating is to be metered effectively onto strip in a conventional commercial operation on conventional equipment.

### Table III

| Coating Solution | Viscosity, centipoise Immediately | 1 Hour | 22 Hours | 11 Days | 25 Days |
|---|---|---|---|---|---|
| A | 50 | 80 | 1650 | ----- | ----- |
| B | 40 | 63 | 1600 | ----- | ----- |
| C | 40 | 60 | 1563 | ----- | ----- |
| D | 38 | 45 | 1410 | ----- | ----- |
| E | 25 | 25 | 35 | 690 | 725 |

These results demonstrate that replacement of as little as about 5% of the colloidal silica with powdered silica can produce a satisfactory coating, provided that the coating solution is allowed to age for an appropriate time. The water content depends upon the ageing time. If the coating is to be used shortly after it is prepared, then a minimum of water would be used. If the solution is to be prepared in large quantity and stored for later use, then a relatively large quantity of water would be required for the same viscosity. As a practical matter, when the stress coating does not require long storage periods prior to use, then it is preferable that about 15% to 30% replacement be made.

### Example III

Coating solutions were prepared using nominally 5% and 50% powdered silica as replacement for colloidal silica, and using either magnesium phosphate or aluminium phosphate. The compositions, in weight percent, are set forth in Table IV.

### Table IV

| Coating Solution | $P_2O_5$ | CrO | MgO | $Al_2O_3$ | Silica Colloidal | Powder | % Silica Replaced with Powder |
|---|---|---|---|---|---|---|---|
| F | 8.7 | 3.9 | 1.4 | | 19.7 | 1.0 | 4.8 |
| G | 7.5 | 3.6 | 1.4 | | 9.0 | 9.0 | 50.0 |
| H | 17.1 | 3.4 | | 4.1 | 13.1 | 0.7 | 5.1 |
| I | 18.2 | 3.7 | | 4.4 | 7.3 | 7.3 | 50.0 |

The thickness, appearance and tension of samples with these coatings thereon are set forth in Table V.

### Table V

| Coat | Thickness (mil) | Appearance | Tension (psi) |
|---|---|---|---|
| F | .19 | Gray | 1525 |
| G | .20 | White | 1425 |
| H | .22 | Gray | 1255 |
| I | .20 | White | 1395 |

It may be seen from these examples that a tension of 1000 psi is achieved when colloidal silica is replaced by about either 5 or 50% of finely powdered silica. The

0201228

samples also had good appearance, comparable to stress coatings containing silica only as colloidal silica.

As was an object of the present invention, a stress coating composition is provided which has relatively high viscosity and which can be applied uniformly and in controlled thickness by metering onto the steel surface. The invention has the advantage that the stress coating may be applied in small coating thicknesses with comparable tensional stress to the steel, and correspondingly, greater tensional stress can result at a given coating thickness when compared to conventional stress coatings.

CLAIMS

1.  A stress coating composition for application to final annealed grain-oriented silicon steel to provide tensional stress to the steel, said stress coating composition containing silica, metal phosphate, hexavalent chromium and water, <u>characterised in that</u> said silica is in the form of 5 to 50% finely powdered silica and the balance as colloidal silica, said stress coating composition having increased viscosity.

2.  A stress coating composition according to claim 1, wherein the viscosity is greater than 50 centipoise.

3.  A stress coating composition according to claim 1 or 2, wherein said colloidal silica contains a maximum of 50%, by weight, of water.

4.  A stress coating composition according to claim 1, 2 or 3, wherein the finely powdered silica has a maximum particle size of 100 millimicrons.

5.  A stress coating composition according to any one of the preceding claims, wherein the finely powdered silica particle size ranges from 1 to 50 millimicrons.

6.  A stress coating composition according to any one of the preceding claims, wherein at least 15% of the silica is in finely powdered form.

7.  A stress coating composition according to any one of the preceding claims, which upon curing places the steel in tension of at least 800 psi (56.32 $kg/cm^2$).

8.  A stress coating composition according to claim 7, which upon curing places the steel in tension of at least 1000 psi (70.4 $kg/cm^2$).

9.  An article of manufacture of grain-oriented silicon steel having a base coating and a cured stress coating thereon, said stress coating being applied to final annealed steel and then cured, said cured stress coating having been formed from an aqueous solution containing silica, metal phosphate, hexavalent chromium and water, <u>characterised in that</u> said silica is in the form of 5 to 50% finely powdered silica and the balance

0201228

colloidal silica, and said cured coating places the steel in tension of at least 800 psi (56.32 kg/cm$^2$) with the effective total thickness of base coating and stress coating as low as 0.12 mil (0.0003cm).

10. An article of steel according to claim 9, wherein the steel is in tension of at least 1000 psi (70.4 kg/cm$^2$) with a total coating thickness as low as 0.14 mil (0.00036cm).